# EUROPÄISCHE PATENTANMELDUNG

(11) **EP 4 091 741 A1**
(43) Veröffentlichungstag der Anmeldung: **23.11.2022**
(21) Anmeldenummer: 21175018.7
(22) Anmeldetag: 20.05.2021
(51) Int. Cl.: B22F 5/00, B22F 5/10, B22F 10/10, B22F 10/66, B33Y 40/20, F04D 29/66, G01M 1/34, H02K 1/02, H02K 15/02, H02K 15/16, H02K 41/06

(54) **VERFAHREN ZUR HERSTELLUNG EINES MATERIALLAGENGEFÜGES FÜR EINE ELEKTRISCHE ROTIERENDE MASCHINE**

(71) Anmelder: Siemens Aktiengesellschaft, 80333 München (DE)
(72) Erfinder: Mutzbauer, Frank, 97618 Hollstadt (DE); Vollmer, Rolf, 36129 Gersfeld (DE)

(57) **Zusammenfassung**

Die Erfindung betrifft ein Verfahren zur Herstellung eines Materiallagengefüges (14) für eine elektrische rotierende Maschine (2) mit einer Vielzahl von Materiallagen (22), wobei die Materiallagen (22) eine Lagendicke (d) zwischen 0,5 und 500 µm, insbesondere zwischen 10 und 100 µm, aufweisen und ein weichmagnetisches Material enthalten. Um das Herstellungsverfahren zu verbessern, werden folgende Schritte vorgeschlagen: Stapeln und Fügen (30) der Vielzahl von Materiallagen (22) zu einem Materiallagengefüge (14) mit einer Öffnung (24), Erfassen (32) einer Ist-Geometrie von zumindest einem Teil des Materiallagengefüges (14), Ermitteln (34) einer Abweichung der Ist-Geometrie von einer Soll-Geometrie, Positionieren (36) des Materiallagengefüges (14) anhand der ermittelten Abweichung (50) und Bearbeiten (38) einer Kontur des Materiallagengefüges (14).

## Beschreibung

Die Erfindung betrifft ein Verfahren zur Herstellung eines Materiallagengefüges für eine elektrische rotierende Maschine mit einer Vielzahl von Materiallagen.

Ferner betrifft die Erfindung eine Steuereinheit mit Mitteln zur Durchführung eines derartigen Verfahrens.

Darüber hinaus betrifft die Erfindung ein Computerprogramm zur Durchführung eines derartigen Verfahrens bei Ablauf in einer Steuereinheit.

In elektrischen Maschinen kommen üblicherweise Blechpakete aus gestapelten Elektroblechen zum Einsatz, um eine Ausbreitung von Wirbelströmen zu unterdrücken. Derartige elektrische Maschinen sind beispielsweise Motoren, Generatoren und Übertrager, wie Transformatoren und Schaltgeräte. Die Elektrobleche, welche beispielsweise einen weichmagnetischen Werkstoff, insbesondere Eisen, enthalten, werden üblicherweise aus gewalzten Großblechen herausgeschnitten beziehungsweise gestanzt. Anschließend werden die Bleche zu einem Blechpaket paketiert. Durch ein derartiges konventionelles Herstellungsverfahren sind derzeit großtechnisch keine Bleche herstellbar, die eine Lagendicke von maximal 100 µm aufweisen. Zudem fällt beim Herausschneiden bzw. Stanzen der Bleche aus den Großblechen Abfall an.

Die Offenlegungsschrift EP 3 595 148 A1 beschreibt ein Verfahren zur Herstellung einer Materiallage mit einer Lagendicke zwischen 0,5 und 500 µm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Es ist in der Praxis eine Herausforderung, stabile Materiallagengefüge, welche die Funktionen von Blechpaketen innehaben, aus gedruckten Materiallagen herzustellen, deren Toleranz geeignet für eine anschließende Weiterbearbeitung ist, da die dünnen gedruckten Materiallagen beispielsweise weniger stabil und maßhaltig als dickere gestanzte Bleche sind. Ferner ist eine Einzelkalibrierung von Materiallagen vor dem Zusammenstellen des Materiallagengefüges sehr zeitaufwändig und kostenintensiv.

Vor diesem Hintergrund liegt der Erfindung die Aufgabe zugrunde, die Herstellung eines Materiallagengefüges für eine elektrische rotierende Maschine zu verbessern.

Diese Aufgabe wird erfindungsgemäß gelöst durch ein Verfahren zur Herstellung eines Materiallagengefüges für eine elektrische rotierende Maschine mit einer Vielzahl von Materiallagen, wobei die Materiallagen eine Lagendicke zwischen 0,5 und 500 µm, insbesondere zwischen 10 und 100 µm, aufweisen und ein weichmagnetisches Material enthalten, aufweisend folgende Schritte: Stapeln und Fügen der Vielzahl von Materiallagen zu einem Materiallagengefüge mit einer Öffnung, Erfassen einer Ist-Geometrie von zumindest einem Teil des Materiallagengefüges, Ermitteln einer Abweichung der Ist-Geometrie von einer Soll-Geometrie, Positionieren des Materiallagengefüges anhand der ermittelten Abweichung und Bearbeiten einer Kontur des Materiallagengefüges.

Ferner wird die Aufgabe erfindungsgemäß gelöst durch eine Steuereinheit mit Mitteln zur Durchführung eines derartigen Verfahrens.

Darüber hinaus wird die Aufgabe erfindungsgemäß gelöst durch ein Computerprogramm zur Durchführung eines derartigen Verfahrens bei Ablauf in einer Steuereinheit.

Die in Bezug auf das Verfahren nachstehend angeführten Vorteile und bevorzugten Ausgestaltungen lassen sich sinngemäß auf die Steuereinheit und das Computerprogramm übertragen.

Der Erfindung liegt die Überlegung zugrunde, ein Verfahren zur Herstellung eines Materiallagengefüges, welches aus einer Vielzahl von Materiallagen hergestellt ist, zu verbessern, indem das Materiallagengefüge nach dem Stapeln und Fügen der Materiallagen anhand ermittelter Geometriedaten nachbearbeitet wird. Das Materiallagengefüge ist beispielsweise für einen Rotor oder einen Stator konfiguriert und kann die Aufgaben eines Rotor-Blechpakets oder eines Stator-Blechpakets wahrnehmen. Die Materiallagen weisen eine Lagendicke zwischen 0,5 und 500 µm, insbesondere zwischen 10 und 100 µm, auf und enthalten ein weichmagnetisches Material, beispielsweise Eisen oder eine Eisenlegierung. Die Materiallagen sind zur Schaffung des Materiallagengefüges beispielsweise übereinander angeordnet. Insbesondere sind die Materiallagen in Richtung einer Rotationsache, in anderen Worten: entlang einer Rotationsachse, des Materiallagengefüges angeordnet. Durch eine derartige Lagendicke wird eine optimierte WirbelstromUnterdrückung innerhalb des Materiallagengefüges erreicht.

Das Materiallagengefüge weist eine, insbesondere zylinderförmige, Öffnung auf, welche zur Aufnahme eines Rotors und/oder einer Welle geeignet ist. Durch Stapeln und Fügen werden die Materiallagen zu einem Materiallagengefüge verbunden. Das Fügen erfolgt beispielsweise durch eine stoffschlüssige Verbindung. Diese wird insbesondere durch Verkleben und anschließendes Pressen hergestellt. In einem weiteren Verfahrensschritt wird eine Ist-Geometrie zumindest eines Teils des Materiallagengefüges, z.B. eine Innenkontur und/oder eine Außenkontur, erfasst. Für die Erfassung kann ein taktiles und/oder ein optisches Verfahren herangezogen werden. Insbesondere wird ein Taster, ein Laser und/oder eine Kamera verwendet. Eine derartige Erfassung der Ist-Geometrie ermöglicht eine präzise Analyse sowie eine schnelle und flexible digitale Signalverarbeitung.

Nach dem Erfassen der Ist-Geometrie wird eine Abweichung von einer Soll-Geometrie ermittelt. Die Soll-Geometrie wird beispielsweise digital über eine zentrale IT-Infrastruktur, insbesondere über eine Cloud, bereitgestellt. Die Soll-Geometrie kann als digitaler Zwilling in einer Cloud vorliegen. Alternativ kann die Soll-Geometrie aus Merkmalen der Ist-Geometrie, wie beispielsweise einem Verlauf eines Nutgrunds, ermittelt werden. Anhand der Abweichung wird das Materiallagengefüge zur weiteren Bearbeitung seiner Kontur positioniert. Die Positionierung erfolgt beispielsweise mit einer, insbesondere beweglichen, Aufnahmevorrichtung. Eine derartige Aufnahmevorrichtung kann z.B. ein, insbesondere neigbarer, Maschinentisch sein. Die Kontur des Materiallagengefüges, insbesondere eine Außenkontur und/oder eine Innenkontur im Bereich der Öffnung, wird beispielsweise mittels eines abtragenden, insbesondere spanenden, Verfahrens an die Soll-Geometrie angepasst. Durch eine derartige präzise Nachbearbeitung des Materiallagengefüges wird eine verbesserte Materialausnutzung erreicht, was zu weniger Abfall und einem verringerten CO2-Ausstoß während der Fertigung führt. Ferner wird durch ein derartiges Verfahren eine Optimierung der Geometrie, beispielsweise hinsichtlich eines Abstands konzentrischer Hüllkurven und hinsichtlich einer Luftspalt-Dimensionierung, erreicht, was zu einer Erhöhung eines Drehmoments und weniger Drehmomentwelligkeit führt.

Die Mittel zur Durchführung des Verfahrens der Steuereinheit umfassen beispielsweise einen digitalen Logikbaustein, insbesondere einen Mikroprozessor, einen Mikrocontroller, einen FPGA (field programmable gate array) oder einen ASIC (application-specific integrated circuit), der für den Betrieb der Anordnung zur Materialextrusion konfiguriert ist. Durch eine derartige Steuereinheit ist ein Prozess, insbesondere eine Prozessreihenfolge, leicht und kostengünstig optimierbar. Eine weitere Ausführungsform sieht vor, dass die Ist-Geometrie der Öffnung und der Außenkontur des Materiallagengefüges erfasst wird, wobei eine der Außenkonturachse aus der Ist-Geometrie der Außenkontur und eine Öffnungsachse aus der Ist-Geometrie der Öffnung ermittelt wird, wobei eine Sollachse aus der Außenkonturachse und der Öffnungsachse ermittelt wird, wobei eine Abweichung der Öffnungsachse von der Sollachse ermittelt wird. Die ermittelten Achsen werden beispielsweise mittels eines Verfahrens zur Ausgleichsrechnung ermittelt und als Raumlinien in einem dreidimensionalen Raum angegeben. Die Ermittlung der Sollachse erfolgt beispielsweise mit den kleinsten Fehlerquadraten der Außenkonturachse und der Öffnungsachse. Durch Reduzierung mitunter komplexer Geometrien auf einfache Achsen wird eine Datenmenge erheblich reduziert und eine Berechnung vereinfacht. Durch das Heranziehen der Öffnung und der Außenkontur wird beispielsweise eine Anpassung der Außenkontur an die Kontur der Öffnung durch Nachbearbeiten ermöglicht.

Eine weitere Ausführungsform sieht vor, dass die Ist-Geometrie der Öffnung und der Außenkontur des Materiallagengefüges erfasst wird, wobei eine Sollachse aus der Ist-Geometrie der Außenkontur und der Öffnung sowie eine Öffnungsachse aus der Ist-Geometrie der Öffnung ermittelt wird, wobei eine Abweichung der Öffnungsachse von der Sollachse ermittelt wird. Insbesondere wird die Sollachse unmittelbar aus der Ist-Geometrie der Außenkontur und der Öffnung mittels eines Verfahrens zur Ausgleichsrechnung ermittelt, was zu einer Reduzierung der Berechnungsschritte führt.

Eine weitere Ausführungsform sieht vor, dass das Materiallagengefüge Nuten aufweist, wobei die Ist-Geometrie der Öffnung und zumindest eines Teils der Nuten des Materiallagengefüges erfasst wird, wobei eine Sollachse aus der Ist-Geometrie der Nuten und eine Öffnungsachse aus der Ist-Geometrie der Öffnung ermittelt wird, wobei eine Abweichung der Öffnungsachse von der Sollachse ermittelt wird. Beispielsweise wird ein Verlauf eines Nutgrunds erfasst. Durch das Einbeziehen einer Geometrie der Nuten wird beispielsweise eine Anpassung der Außenkontur an die Kontur des Nutgrunds durch Nachbearbeiten ermöglicht.

Eine weitere Ausführungsform sieht vor, dass zumindest ein Teil der Ist-Geometrie mittels eines taktilen oder optischen Verfahrens als Punktewolke ermittelt wird. Durch die Punktwolke werden die erfassten Geometriedaten digital, beispielsweise in einem zylindrischen oder rechtwinkeligen Koordinatensystem, angegeben, was eine Weiterverarbeitung vereinfacht.

Eine weitere Ausführungsform sieht vor, dass zumindest eine der Achsen mittels eines Verfahrens zur Ausgleichsrechnung anhand von Werten aus zumindest einer Punktewolke ermittelt wird. Eine Datenverarbeitung mittels Ausgleichsrechnung aus der Koordinatenmesstechnik ist schnell und einfach zu realisieren.

Eine weitere Ausführungsform sieht vor, dass das Positionieren des Materiallagengefüges folgende Schritte umfasst: Aufnehmen einer Spannhülse in der Öffnung des Materiallagengefüges, Verbinden der Spannhülse mit einer Drehspindel, welche eine Drehachse aufweist und Ausrichten des Materiallagengefüges mit der Spannhülse, sodass die Sollachse mit der Drehachse der Drehspindel zusammenfällt. Eine derartige Spannhülse ist einfach und zuverlässig zu befestigen. Die Bearbeitung mittels einer Drehspindel ist präzise und kostengünstig zu realisieren.

Eine weitere Ausführungsform sieht vor, dass die Spannhülse mit der Drehspindel über Exzenter verbunden wird, wobei das Ausrichten des Materiallagengefüges mittels der Exzenter erfolgt. Eine derartige Befestigung ist einfach und präzise.

Eine weitere Ausführungsform sieht vor, dass das Bearbeiten der Außenkontur des Materiallagengefüges mittels eines spanenden Verfahrens und/oder mittels eines Erodierverfahrens, insbesondere eines Senkerodierverfahrens, erfolgt. Ein spanendes Verfahren ist beispielsweise Drehen, Fräsen oder Hobeln. Insbesondere unter Verwendung einer Drehspindel sind derartige Verfahren leicht und kostengünstig zu realisieren.

Eine weitere Ausführungsform sieht vor, dass das Materiallagengefüge über die Öffnung mit einer, insbesondere um zwei Achsen, neigbaren Aufnahmevorrichtung verbunden wird, wobei das Bearbeiten der Außenkontur des Materiallagengefüges mittels eines konzentrisch rotierbaren Werkzeugs erfolgt. Eine derartige Aufnahmevorrichtung ist beispielsweise ein Maschinentisch oder ein Roboter. Insbesondere ist die Aufnahmevorrichtung translatorisch starr und rotatorisch beweglich ausgeführt. Das konzentrisch rotierbare Werkzeug ist beispielsweise als Zirkularfräser ausgeführt. Eine derartige Bearbeitung ist präzise und kostengünstig zu realisieren.

Eine weitere Ausführungsform sieht vor, dass das Materiallagengefüge, insbesondere über die Öffnung, mit einer starren Aufnahmevorrichtung verbunden wird, wobei das Bearbeiten der Außenkontur des Materiallagengefüges mittels eines Werkzeugs erfolgt, welches zumindest eine Fünf-Achs-Kinematik aufweist. Insbesondere sind drei Achsen mit einer translatorischen Kinematik, auch Linearachsen genannt, und zwei Achsen mit einer rotatorischen Kinematik, Rundachsen genannt, vorgesehen. Das Werkzeug weist beispielsweise einen 5-Achs Fräskopf, einen Laser und/oder einen Roboterarm auf. Ferner kann das Werkzeug eine Kinematik mit mehr als fünf Achsen aufweisen. Eine derartige Bearbeitung ist sehr präzise.

Eine weitere Ausführungsform sieht vor, dass das Materiallagengefüge für einen Stator, insbesondere einen Außenstator, einer elektrischen rotierenden Maschine konfiguriert ist und wobei das Materiallagengefüge des Stators nach dem Bearbeiten der Außenkontur in einem, insbesondere zylinderförmigen, Gehäuse aufgenommen wird. Die Aufnahme erfolgt beispielsweise durch eine unlösbare Verbindung, insbesondere stoffschlüssig, z.B. durch Schweißen, oder kraftschlüssig, z.B. durch Schrumpfen. Eine derartige Verbindung ist einfach und kostengünstig.

Eine weitere Ausführungsform sieht vor, dass die Materiallagen des Materiallagengefüges zumindest teilweise mittels eines additiven Verfahrens und anschließender Sinterung hergestellt sind. Ein derartiges additives Verfahren ist beispielsweise Siebdruck oder Schablonendruck, wodurch sehr dünne Materiallagen herstellbar sind, was zu einer sehr guten Wirbelstromunterdrückung führt.

Eine weitere Ausführungsform sieht vor, dass das Stapeln und Fügen der Vielzahl von Materiallagen folgende Schritte umfasst: Verkleben der Materiallagen, Verdichten der verklebten Materiallagen und Aufbringen zumindest einer, insbesondere axialen, Verbindungsstruktur auf der Außenkontur. Eine derartige Verbindungsstruktur ist beispielsweise eine Schweißnaht, wodurch das Materiallagengefüge eine hohe Stabilität aufweist.

Eine weitere Ausführungsform sieht vor, dass nach dem Stapeln und Fügen der Vielzahl von Materiallagen eine Wicklung eingebracht wird und wobei daraufhin ein Harz aufgebracht wird. Das Harz ist beispielsweise als Gieß- oder Imprägnierharz ausgeführt. Durch das Einbringend der Wicklung und Imprägnieren nach dem Fügen und vor der Erfassung der Geometrie werden Geometrieabweichungen, welche sich durch das Einbringend der Wicklung und das Imprägnieren ergeben bei der anschließenden Nachbearbeitung mit ausgeglichen.

Im Folgenden wird die Erfindung anhand der in den Figuren dargestellten Ausführungsbeispiele näher beschrieben und erläutert.

Es zeigen:
- FIG 1: eine schematische Darstellung einer elektrischen rotierenden Maschine in einer Querschnittsdarstellung,
- FIG 2: eine schematische dreidimensionale Darstellung einer Materiallage,
- FIG 3: ein Blockschaltbild eines ersten Verfahrens zur Herstellung eines Materiallagengefüges,
- FIG 4: eine schematische Darstellung eines zweiten Verfahrens zur Herstellung eines Materiallagengefüges,
- FIG 5: eine schematische Darstellung eines dritten Verfahrens zur Herstellung eines Materiallagengefüges,
- FIG 6: eine schematische Darstellung eines vierten Verfahrens zur Herstellung eines Materiallagengefüges und
- FIG 7: eine schematische Darstellung eines fünften Verfahrens zur Herstellung eines Materiallagengefüges.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

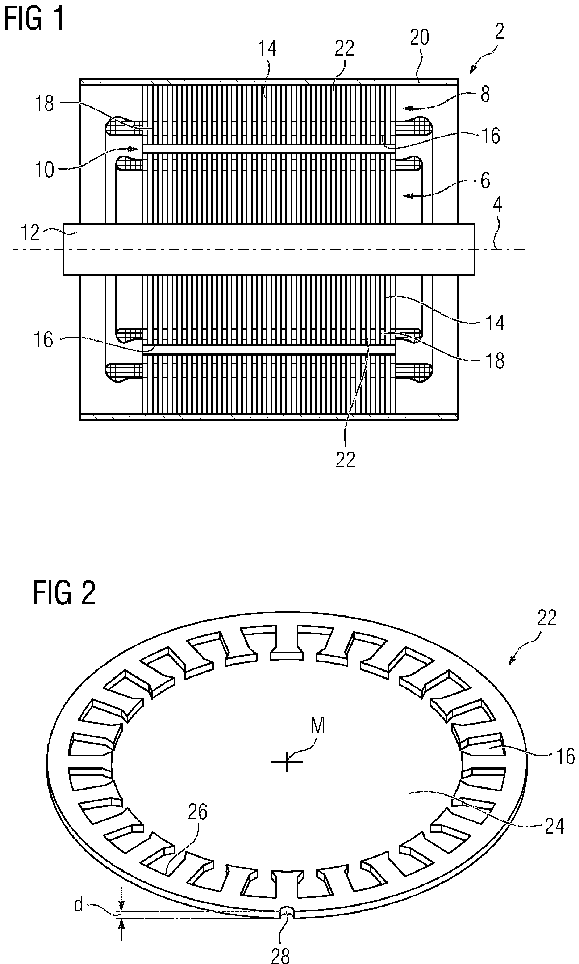

FIG 1 zeigt eine schematische Darstellung einer elektrischen rotierenden Maschine 2 in einer Querschnittsdarstellung. Die elektrische rotierende Maschine 2 ist beispielhaft als Synchronmaschine ausgeführt und als Motor und/oder als Generator betreibbar. Die elektrische rotierende Maschine 2 weist einen um eine Rotationsachse 4 rotierbaren Rotor 6 und einen Stator 8 auf, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Fluidspalt 10, der insbesondere als Luftspalt ausgeführt ist, ausgebildet. Der Rotor 6 weist eine Welle 12 und ein Materiallagengefüge 14, das die Funktionen eines Rotor-Blechpakets innehat, auf. Das Materiallagengefüge 14 des Rotors 6 weist Nuten 16 auf, in welchen eine Wicklung 18 eingebracht ist. Alternativ kann der Rotor Permanentmagnete für eine Ausführung als permanenterregte Synchronmaschine oder einen Kurzschlusskäfig für eine Ausführung als Asynchronmaschine aufweisen. Der Stator 8 weist ebenso ein Materiallagengefüge 14, das die Funktionen eines Stator-Blechpakets innehat, auf. Das Materiallagengefüge 14 des Stators 6 weist ebenfalls Nuten 16 auf, in welchen eine Wicklung 18 eingebracht ist. Der Rotor 6 und der Stator 8 sind in einem Gehäuse 20 untergebracht. Das Materiallagengefüge 14 des Rotors 6 und des Stators 8 ist jeweils aus zueinander isolierten Materiallagen 22 aufgebaut, wobei die Isolation zwischen den Materiallagen 22 beispielsweise durch eine Oxidschicht oder durch eine elektrisch isolierende Lackschicht hergestellt ist.

Ferner sind die Materiallagen 22 zur Ausbildung des Materiallagengefüges 14 in Richtung der Rotationsache 4 übereinander angeordnet. Weitere Anordnungen, bei welchen wenigstens zwei Materiallagen 22 benachbart angeordnet sind, sind denkbar.

FIG 2 zeigt eine schematische dreidimensionale Darstellung einer Materiallage 22, welche beispielhaft für einen Stator 8 konfiguriert ist und nutseitig eine Öffnung 24 aufweist, welche beispielsweise zur Aufnahme eines Rotors 6 vorgesehen ist. Die Materiallage 22 ist im Wesentlichen punktsymmetrisch um einen Mittelpunkt M ausgeführt. Durch die Nuten 16 wird ein Nutgrund 26 ausgebildet. Die Materiallage 22 weist eine Lagendicke d zwischen 0,5 und 500 µm, insbesondere zwischen 10 und 100 µm, auf und ist zumindest teilweise aus einem weichmagnetischen Material hergestellt, das Eisen oder einer Eisenlegierung enthält. Die Materiallage 22 ist mittels eines additiven Verfahrens, z.B. Siebdruck oder Schablonendruck, und anschließender Sinterung hergestellt. Die Materiallage 22 weist optional zumindest eine Ausnehmung 28 auf. Die weitere Ausführung der Materiallage 22 entspricht der in FIG 1.

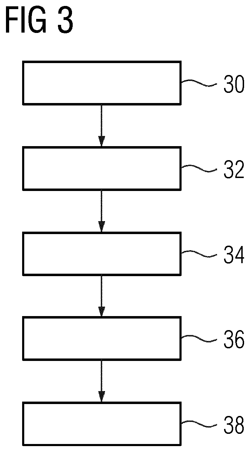

FIG 3 zeigt ein Blockschaltbild eines ersten Verfahrens zur Herstellung eines Materiallagengefüges 14. Das Materiallagengefüge 14 umfasst eine Vielzahl von Materiallagen 22, welche für einen Rotor 6 oder für einen Stator 8 konfiguriert sein können. Das Materiallagengefüge 14 wird durch Stapeln und Fügen 30 einer Vielzahl von Materiallagen 22 hergestellt. Die Materiallagen 22 werden beispielsweise durch Verkleben mit anschließendem Pressen gefügt. Nach dem flächigen, insbesondere vollflächigen, Verkleben der Materiallagen 22 zur Vorfixierung wird das Materiallagengefüge 14 durch Pressen verdichtet, wobei der Kleber während des Pressens aushärtet. Optional wird eine zusätzliche stoffschlüssige Verbindung, beispielsweise durch eine, insbesondere axiale, Schweißnaht hergestellt. Eine derartige axiale Schweißnaht kann jeweils in der zumindest einen Ausnehmung 28 der Materiallage 22 verlaufen. Daraufhin erfolgt ein Erfassen 32 einer Ist-Geometrie von zumindest einem Teil des Materiallagengefüges 14, wobei die Ist-Geometrie beispielsweise mit einem taktilen und/oder optischen Verfahren, insbesondere mittels Taster, Laser und/oder Kamera ermittelt wird. Beispielsweise wird eine Punktewolke ermittelt, welche die Ist-Geometrie zumindest eines Teils des Materiallagengefüges 14 repräsentiert. In einem weiteren Schritt erfolgt ein Ermitteln 34 einer Abweichung der Ist-Geometrie von einer Soll-Geometrie. Die Soll-Geometrie wird beispielsweise über eine zentrale IT-Infrastruktur, insbesondere über eine Cloud, bereitgestellt. Die Soll-Geometrie kann als digitaler Zwilling in einer Cloud vorliegen. Alternativ kann die Soll-Geometrie aus Merkmalen der Ist-Geometrie, wie beispielsweise einem Verlauf eines Nutgrunds 26, ermittelt werden. Nach dem Ermitteln 34 der Abweichung erfolgt ein Positionieren 36 des Materiallagengefüges 14 anhand der ermittelten Abweichung. In einem weiteren Schritt erfolgt ein Bearbeiten 38 einer Kontur des Materiallagengefüges 14. Beispielsweise wird zunächst eine Außenkontur des Materiallagengefüges 14 mittels eines abtragenden, insbesondere spanabhebenden, Verfahrens wie Drehen, Fräsen oder Hobeln bearbeitet. Unter einer Außenkontur eines Materiallagengefüges 14 ist insbesondere eine Außengeometrie zu verstehen. Weist das Materiallagengefüge 14 z.B. eine im Wesentlichen zylinderförmige Außengeometrie auf, wird eine Mantelfläche der im Wesentlichen zylinderförmigen Außengeometrie bearbeitet. Alternativ erfolgt das Bearbeiten 38 der Kontur mittels Erodieren, insbesondere Senkerodieren.

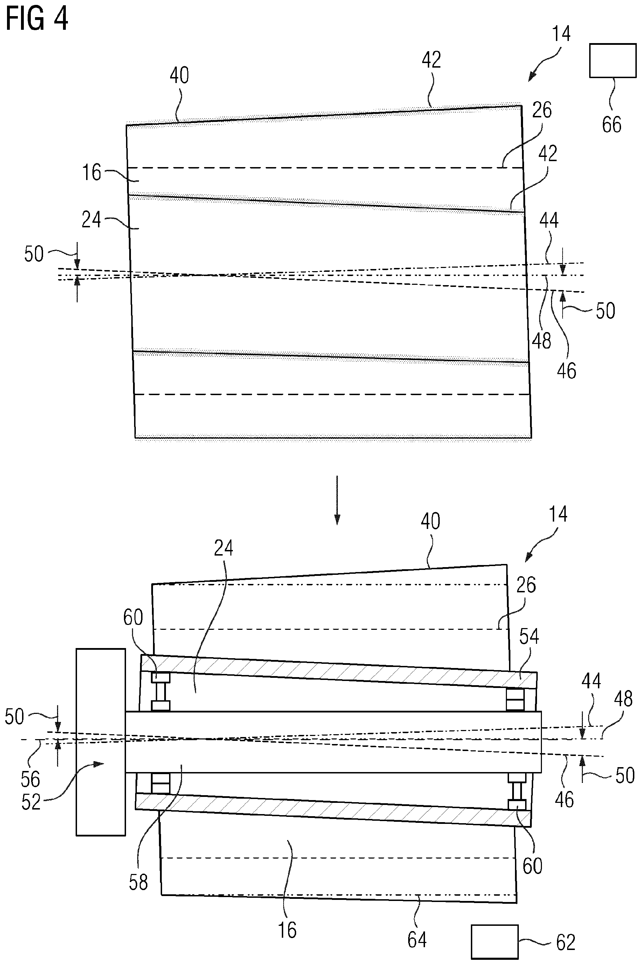

FIG 4 zeigt eine schematische Darstellung eines zweiten Verfahrens zur Herstellung eines Materiallagengefüges 14, wobei das Materiallagengefüge 14 beispielhaft für einen Stator 8, insbesondere einen Außenstator, einer elektrischen rotierenden Maschine 2 konfiguriert ist. Es wird eine Ist-Geometrie der Öffnung 24 und der Außenkontur 40 des Materiallagengefüges 14 mittels eines taktilen und/oder optischen Verfahrens, insbesondere mittels Taster, Laser und/oder Kamera erfasst, wobei die erfassten Daten digital als Punktwolke 42 vorliegen. Die Punkte der jeweiligen Punktwolke 42 weisen Koordinaten eines zylindrischen oder rechtwinkeligen Koordinatensystems auf und bilden die Öffnung 24 und die Außenkontur 40 in einem dreidimensionalen Raum ab. Eine Außenkonturachse 44 wird aus der Ist-Geometrie der Außenkontur 40 ermittelt, während eine Öffnungsachse 46 aus der Ist-Geometrie der Öffnung 24 ermittelt wird. Die Außenkonturachse 44 und die Öffnungsachse 46 sind als Raumlinien ausgeführt, sich dich rechnerisch aus den Punkten der jeweiligen Punktwolke 42 ergeben. Daraufhin wird eine Sollachse 48 aus der Außenkonturachse 44 und der Öffnungsachse 46 gebildet.
Die Achsen 44, 46, 48 werden mittels eines Verfahrens zur Ausgleichsrechnung anhand der Werte aus den jeweiligen Punktewolken 42 ermittelt. Die Ermittlung der Sollachse 48 erfolgt beispielsweise mit den kleinsten Fehlerquadraten der beiden Raumlinien. Alternativ wird die Sollachse 48 unmittelbar aus der Ist-Geometrie der Außenkontur 40 und der Öffnung 24 mittels eines Verfahrens zur Ausgleichsrechnung anhand der Werte aus den Punktewolken 42 ermittelt. Im Anschluss wird eine dreidimensionale Abweichung 50 der Öffnungsachse 46 von der Sollachse 48 ermittelt.

Das Materiallagengefüge 14 wird in einem folgenden Schritt mittels einer Aufnahmevorrichtung 52 anhand der ermittelten Abweichung 50 zur Weiterverarbeitung positioniert. Zum Positionieren 36 des Materiallagengefüges 14 wird eine Spannhülse 54 in der Öffnung 24 des Materiallagengefüges 14, insbesondere kraftschlüssig, aufgenommen. Daraufhin wird die Spannhülse 54 über Exzenter 60 mit einer um eine Drehachse 56 rotierbare Drehspindel 58 verbunden, wobei das Materiallagengefüge 14 mit der Spannhülse 54 über die Exzenter 60 so ausgerichtet wird, dass die Sollachse 48 mit der Rotationsachse 56 der Drehspindel 58 zusammenfällt. Hierbei wird das Materiallagengefüge 14 mit der Spannhülse 54 um die ermittelte Abweichung 50 geneigt. In einen weiteren Schritt wird die Außenkontur 40 des Materiallagengefüges 14 mittels eines spanenden Verfahrens und/oder mittels eines Erodierverfahrens, insbesondere eines Senkerodierverfahrens, bearbeitet. Mittels einer geeigneten, insbesondere translatorisch beweglichen und rotatorisch starren, Werkzeug 62, beispielsweise einem Drehmeißel, wird eine getrimmte Außengeometrie 64 erzeugt, sodass das bearbeitete Materiallagengefüge 14 in einem, insbesondere zylinderförmigen, Gehäuse 20, insbesondere unlösbar, aufgenommen werden kann. Die getrimmte Außengeometrie 64 weist insbesondere eine parallel zur Sollachse 48 bzw. Drehachse 56 verlaufende Mantelfläche auf. Eine Steuereinheit 66 wird für die Steuerung des Verfahrensablaufs verwendet. Die weitere Ausführung des Verfahrens in FIG 4 entspricht der in FIG 3.

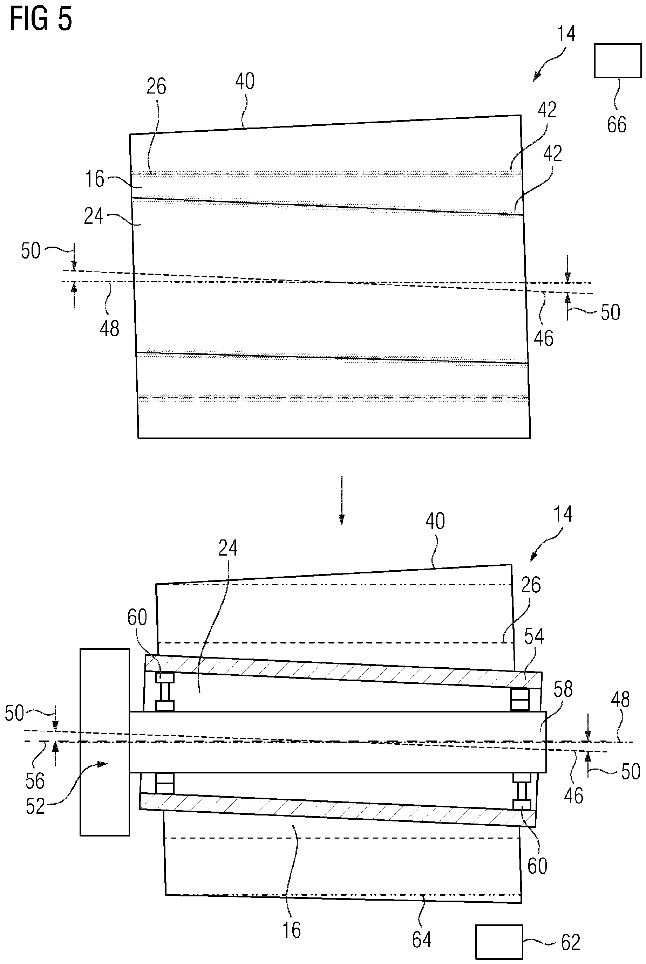

FIG 5 zeigt eine schematische Darstellung eines dritten Verfahrens zur Herstellung eines Materiallagengefüges 14, wobei das Materiallagengefüge 14 beispielhaft für einen Stator 8, insbesondere einen Außenstator, einer elektrischen rotierenden Maschine 2 konfiguriert ist. Es wird eine Ist-Geometrie der Öffnung 24 und zumindest eines Teils der Nuten 16 des Materiallagengefüges 14 erfasst. Beispielhaft wird eine Ist-Geometrie des Nutgrunds 26 der Nuten 16 erfasst, wobei die erfassten Daten, wie in FIG 4, digital als Punktwolke 42 vorliegen. Daraufhin wird eine Sollachse 48 aus der Ist-Geometrie der Nuten 16 und eine Öffnungsachse 46 aus der Ist-Geometrie der Öffnung 24 ermittelt, wobei eine Abweichung 50 der Öffnungsachse 46 von der Sollachse 48 ermittelt wird. Die weitere Ausführung des Verfahrens in FIG 5 entspricht der in FIG 4.

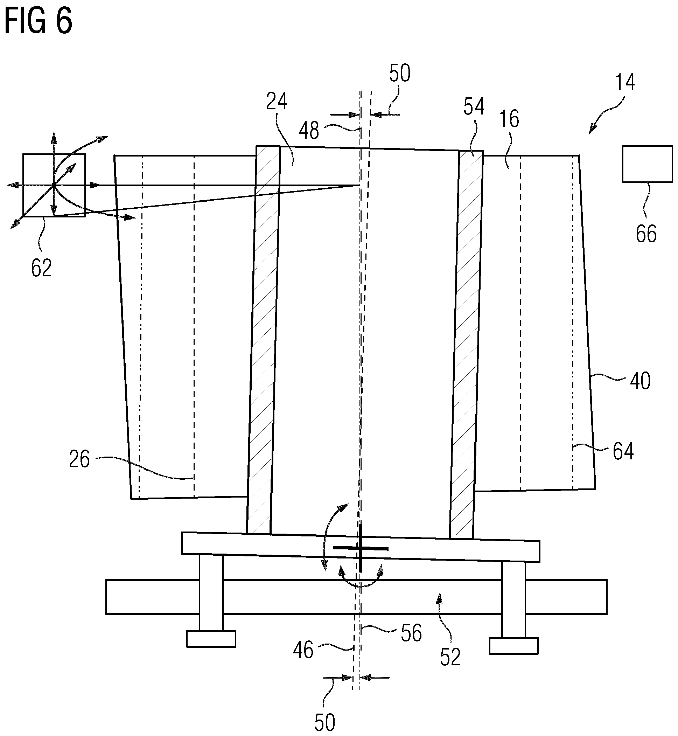

FIG 6 zeigt eine schematische Darstellung eines vierten Verfahrens zur Herstellung eines Materiallagengefüges 14. Nach dem Ermitteln 34 der Abweichung 50 der Öffnungsachse 46 von der Sollachse 48, das beispielsweise wie in FIG 5 beschrieben erfolgt, wird das Materiallagengefüge 14 über die Öffnung 24, mit Aufnahmevorrichtung 52 verbunden, wobei die Aufnahmevorrichtung 52 beispielsweise als ein um zwei Achsen neigbarer Maschinentisch ausgeführt ist. Beispielhaft ist das Materiallagengefüge 14 über eine Spannhülse 54 kraftschlüssig mit dem neigbaren Maschinentisch verbunden. Der Maschinentisch ist translatorisch starr und rotatorisch beweglich ausgeführt. Das Bearbeiten 38 der Außenkontur 40 des Materiallagengefüges 14 erfolgt mittels eines konzentrisch führbaren Werkzeugs 62. Das konzentrisch führbare Werkzeug 62, welches beispielsweise als Zirkularfräser ausgeführt ist, wird zum Abtragen des überschüssigen Materials vom Materiallagengefüge 14, insbesondere kreisförmig, um die Sollachse 48 geführt, sodass die Drehachse 56, um die das Werkzeug 62 geführt wird, mit der Sollachse 48 zusammenfällt. Die weitere Ausführung des Verfahrens in FIG 6 entspricht der in FIG 5.

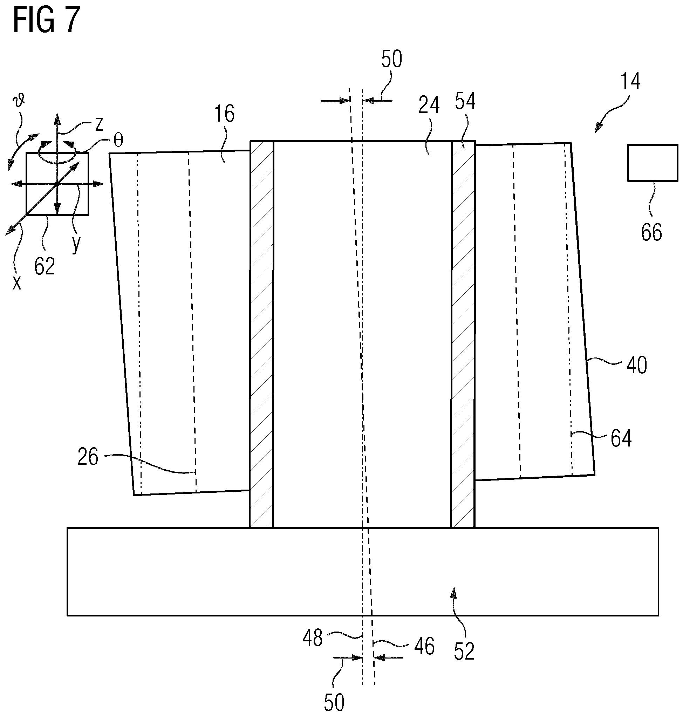

FIG 7 zeigt eine schematische Darstellung eines fünften Verfahrens zur Herstellung eines Materiallagengefüges 14. Nach dem Ermitteln 34 der Abweichung 50 der Öffnungsachse 46 von der Sollachse 48, das beispielsweise wie in FIG 5 beschrieben erfolgt, wird das Materiallagengefüge 14 über die Öffnung 24, mit einer starren Aufnahmevorrichtung 52 verbunden. Die starre Aufnahmevorrichtung 52 ist beispielsweise als Maschinentisch ausgeführt. Das Bearbeiten 38 der Außenkontur 40 des Materiallagengefüges 14 erfolgt mittels eines Werkzeugs 62, welches zumindest eine Fünf-Achs-Kinematik aufweist. Insbesondere sind drei Achsen x, y, z mit einer translatorischen Kinematik, auch Linearachsen genannt, und zwei Achsen θ, ϑ mit einer rotatorischen Kinematik, Rundachsen genannt, vorgesehen. Das Werkzeug 62 weist beispielsweise einen 5-Achs Fräskopf, einen Laser und/oder einen Roboterarm auf. Die weitere Ausführung des Verfahrens in FIG 7 entspricht der in FIG 5.

Zusammenfassend betrifft die Erfindung ein Verfahren zur Herstellung eines Materiallagengefüges 14 für eine elektrische rotierende Maschine 2 mit einer Vielzahl von Materiallagen 22, wobei die Materiallagen 22 eine Lagendicke d zwischen 0,5 und 500 µm, insbesondere zwischen 10 und 100 µm, aufweisen und ein weichmagnetisches Material enthalten. Um das Herstellungsverfahren zu verbessern, werden folgende Schritte vorgeschlagen: Stapeln und Fügen 30 der Vielzahl von Materiallagen 22 zu einem Materiallagengefüge 14 mit einer Öffnung 24, Erfassen 32 einer Ist-Geometrie von zumindest einem Teil des Materiallagengefüges 14, Ermitteln 34 einer Abweichung der Ist-Geometrie von einer Soll-Geometrie, Positionieren 36 des Materiallagengefüges 14 anhand der ermittelten Abweichung 50 und Bearbeiten 38 einer Kontur des Materiallagengefüges 14.

## Patentansprüche

1. Verfahren zur Herstellung eines Materiallagengefüges (14) für eine elektrische rotierende Maschine (2) mit einer Vielzahl von Materiallagen (22),
wobei die Materiallagen (22) eine Lagendicke (d) zwischen 0,5 und 500 µm, insbesondere zwischen 10 und 100 µm, aufweisen und ein weichmagnetisches Material enthalten, aufweisend folgende Schritte:
- Stapeln und Fügen (30) der Vielzahl von Materiallagen (22) zu einem Materiallagengefüge (14) mit einer Öffnung (24),
- Erfassen (32) einer Ist-Geometrie von zumindest einem Teil des Materiallagengefüges (14),
- Ermitteln (34) einer Abweichung der Ist-Geometrie von einer Soll-Geometrie,
- Positionieren (36) des Materiallagengefüges (14) anhand der ermittelten Abweichung (50),
- Bearbeiten (38) einer Kontur des Materiallagengefüges (14).

2. Verfahren nach Anspruch 1,
wobei die Ist-Geometrie der Öffnung (24) und der Außenkontur (40) des Materiallagengefüges (14) erfasst wird,
wobei eine der Außenkonturachse (44) aus der Ist-Geometrie der Außenkontur (40) und eine Öffnungsachse (46) aus der Ist-Geometrie der Öffnung (24) ermittelt wird,
wobei eine Sollachse (48) aus der Außenkonturachse (44) und der Öffnungsachse (46) ermittelt wird,
wobei eine Abweichung (50) der Öffnungsachse (46) von der Sollachse (48) ermittelt wird.

3. Verfahren nach Anspruch 1,
wobei die Ist-Geometrie der Öffnung (24) und der Außenkontur (40) des Materiallagengefüges (14) erfasst wird,
wobei eine Sollachse (48) aus der Ist-Geometrie der Außenkontur (40) und der Öffnung (24) sowie eine Öffnungsachse (46) aus der Ist-Geometrie der Öffnung (24) ermittelt wird,
wobei eine Abweichung (50) der Öffnungsachse (46) von der Sollachse (48) ermittelt wird.

4. Verfahren nach Anspruch 1,
wobei das Materiallagengefüge (14) Nuten (16) aufweist, wobei die Ist-Geometrie der Öffnung (24) und zumindest eines Teils der Nuten (16) des Materiallagengefüges (14) erfasst wird,
wobei eine Sollachse (48) aus der Ist-Geometrie der Nuten (16)
und eine Öffnungsachse (46) aus der Ist-Geometrie der Öffnung (24) ermittelt wird,
wobei eine Abweichung (50) der Öffnungsachse (46) von der Sollachse (48) ermittelt wird.

5. Verfahren nach einem der Ansprüche 2 bis 4,
wobei zumindest ein Teil der Ist-Geometrie mittels eines taktilen oder optischen Verfahrens als Punktewolke (42) ermittelt wird.

6. Verfahren nach Anspruch 5,
wobei zumindest einer der Achsen (44, 46 ,48) mittels eines Verfahrens zur Ausgleichsrechnung anhand von Werten aus zumindest einer Punktewolke (42) ermittelt wird.

7. Verfahren nach einem der vorherigen Ansprüche,
wobei das Positionieren (36) des Materiallagengefüges (14) folgende Schritte umfasst:
- Aufnehmen einer Spannhülse (54) in der Öffnung (24) des Materiallagengefüges (14),
- Verbinden der Spannhülse (54) mit einer Drehspindel (58), welche eine Drehachse (56) aufweist und
- Ausrichten des Materiallagengefüges (14) mit der Spannhülse (54), sodass die Sollachse (48) mit der Drehachse (56) der Drehspindel (58) zusammenfällt.

8. Verfahren nach Anspruch 7,
wobei die Spannhülse (54) mit der Drehspindel (58) über Exzenter (60) verbunden wird,
wobei das Ausrichten des Materiallagengefüges (14) mittels der Exzenter (60) erfolgt.

9. Verfahren nach einem der Ansprüche 7 oder 8,
wobei das Bearbeiten (38) der Außenkontur (40) des Materiallagengefüges (14) mittels eines spanenden Verfahrens und/oder mittels eines Erodierverfahrens, insbesondere eines Senkerodierverfahrens, erfolgt.

10. Verfahren nach einem der Ansprüche 1 bis 6,
wobei das Materiallagengefüge (14) über die Öffnung (24) mit einer, insbesondere um zwei Achsen, neigbaren Aufnahmevorrichtung (52) verbunden wird,
wobei das Bearbeiten (38) der Außenkontur (40) des Materiallagengefüges (14) mittels eines konzentrisch rotierbaren Werkzeugs (62) erfolgt.

11. Verfahren nach einem der Ansprüche 1 bis 6,
wobei das Materiallagengefüge (14), insbesondere über die Öffnung (24), mit einer starren Aufnahmevorrichtung (52) verbunden wird,
wobei das Bearbeiten (38) der Außenkontur (40) des Materiallagengefüges (14) mittels eines Werkzeugs (62) erfolgt, welches zumindest eine Fünf-Achs-Kinematik aufweist.

12. Verfahren nach einem der vorherigen Ansprüche,
wobei das Materiallagengefüge (14) für einen Stator (8), insbesondere einen Außenstator, einer elektrischen rotierenden Maschine (2) konfiguriert ist und
wobei das Materiallagengefüge (14) des Stators (8) nach dem Bearbeiten (38) der Außenkontur (40) in einem, insbesondere zylinderförmigen, Gehäuse (20) aufgenommen wird.

13. Verfahren nach einem der vorherigen Ansprüche,
wobei die Materiallagen (22) des Materiallagengefüges (14) zumindest teilweise mittels eines additiven Verfahrens und anschließender Sinterung hergestellt sind.

14. Verfahren nach einem der vorherigen Ansprüche,
wobei das Stapeln und Fügen (30) der Vielzahl von Materiallagen (22) folgende Schritte umfasst:
- Verkleben der Materiallagen (22),
- Verdichten der verklebten Materiallagen (22) und
- Aufbringen zumindest einer, insbesondere axialen, Verbindungsstruktur auf der Außenkontur (40).

15. Verfahren nach einem der vorherigen Ansprüche,
wobei nach dem Stapeln und Fügen (30) der Vielzahl von Materiallagen (22) eine Wicklung (18) eingebracht wird und
wobei daraufhin ein Harz aufgebracht wird.

16. Steuereinheit (66) mit Mitteln zur Durchführung eines Verfahrens nach einem der Ansprüche 1 bis 15.

17. Computerprogramm zur Durchführung eines Verfahrens nach einem der Ansprüche 1 bis 15 bei Ablauf in einer Steuereinheit (66) nach Anspruch 16.
